# EUROPÄISCHE PATENTSCHRIFT

(11) **EP 2 117 262 B1**
(45) Veröffentlichungstag und Bekanntmachung des Hinweises auf die Patenterteilung: **05.09.2018**
(21) Anmeldenummer: 09166592.7
(22) Anmeldetag: 15.11.2000
(51) Int. Cl.: H04W 4/12, H04W 52/02

(54) **Mobiles Telekommunikationsendgerät**
mobile telecommunications device
appareil de telecommunications mobile

(30) Priorität: 07.12.1999 DE 19958777
(43) Veröffentlichungstag der Anmeldung: 11.11.2009
(62) Teilanmeldung aus: 00987136.9
(73) Patentinhaber: IPCom GmbH & Co. KG, 82049 Pullach (DE)
(72) Erfinder: Hans, Martin, 31162 Bad Salzdetfurth (DE); Kowalewski, Frank, 82008 Unterhaching (DE); Laumen, Josef, 81541 München (DE); Schmidt, Gunnar, 78052 Villingen-Schwenningen (DE)
(74) Vertreter: Tomlinson, Edward James

(56) Entgegenhaltungen:
- EP-A- 0 782 359
- WO-A1-95/29568
- GB-A- 2 244 409
- GB-A- 2 309 138
- US-A- 5 448 759

## Beschreibung

### Stand der Technik

Die Erfindung geht von einem mobilen Telekommunikationsendgerät nach der Gattung des Hauptanspruchs aus.

In einem nach dem GSM-Standard (Global System for Mobile Communications) ausgebildeten Mobilfunksystem ist der sogenannte SMS-Kurznachrichtendienst (Short Message Service) bekannt. Ein Mobiltelefon, das über das Mobilfunknetz erreichbar und im Mobilfunknetz angemeldet ist, befindet sich in einem Empfangsbetriebsmodus, in dem es über eine Empfangsvorrichtung SMS-Kurznachrichten aus dem Mobilfunknetz empfangen kann.

Aus "EP 0 782 359 A2" ist ein mobiles Telekommunikationsendgerät bekannt, in dem - vom Benutzer auswählbar - ein "Pager Mode (oder: Message Mode)" oder ein "Cellular Telephone Mode" am mobilen Telekommunikationsendgerät einstellbar ist. Ferner kann im "Pager Mode" das Endgerät auf energiesparende Weise betrieben werden, indem es sich zunächst beim Netzwerk abmeldet und sich nach einer vorgegebenen Timeout-Periode wieder beim Netzwerk anmeldet. Das mobile Telekommunikationsendgerät bleibt für eine vorgegebene Zeitperiode angemeldet und kann somit jegliche anstehenden SMS-Nachrichten oder Nachrichten von anderen Typen während dieser vorgegebenen Zeitperiode empfangen.

In "GB 2 309 138 A" ist ein Mobiltelefon offenbart, das periodisch ausgeschaltet wird, um die Batterieenergie zu sparen. Eine während so einer Periode empfangene Nachricht wird in der Basisstation des Telekommunikationssystems gespeichert. Zu einer vorgegebenen Zeit oder nach einem vorgegebenen Zeitintervall ruft das Mobiltelefon die Basisstation automatisch an. Sollte eine Nachricht für das Mobiltelefon vorliegen, wird sie vom Mobiltelefon empfangen und im Mobiltelefon gespeichert. Das Vorliegen dieser Nachricht kann von einer LED gezeigt werden.

### Vorteile der Erfindung

Das erfindungsgemäße mobile Telekommunikationsendgerät mit den Merkmalen des Hauptanspruchs hat demgegenüber den Vorteil, dass ein Abfragebetriebsmodus am mobilen Telekommunikationsendgerät einstellbar ist, in dem eine Steuerung für den Fall, dass der Empfangsbetriebsmodus abgeschaltet ist, zu mindestens einer ersten vorgegebenen Zeit den Empfangsbetriebsmodus aktiviert, dass die Steuerung prüft, ob innerhalb einer zweiten vorgegebenen Zeit nach der Aktivierung des Empfangsbetriebsmodus Informationen über mindestens eine im Telekommunikationsnetz für das mobile Telekommunikationsendgerät vorliegende Nachricht in der Empfangsvorrichtung empfangen wurden und die Steuerung im Abfragebetriebsmodus die mindestens eine erste vorgegebene Zeit zur Aktivierung des Empfangsbetriebsmodus in Abhängigkeit der im zuletzt eingestellten Empfangsbetriebsmodus erzielten Erreichbarkeit des mobilen Telekommunikationsendgerätes im Telekommunikationsnetz vorgibt, wobei die Steuerung für den Fall, in dem sie den Empfang von Informationen über mindestens eine im Telekommunikationsnetz für das mobile Telekommunikationsendgerät vorliegende Nachricht detektiert, eine Auswertung der mindestens einen Nachricht einleitet, und dass die Steuerung bei der Auswertung der mindestens einen Nachricht über eine Sendevorrichtung des mobilen Telekommunikationsendgerätes eine Verbindung zum Telekommunikationsnetz, insbesondere zu einer vierten vorgegebenen Zeit, aufbaut, um die mindestens eine Nachricht aus dem Telekommunikationsnetz in das mobile Telekommunikationsendgerät zu laden. Auf diese Weise wird das mobile Telekommunikationsendgerät in die Lage versetzt, sich zu der mindestens einen ersten vorgegebenen Zeit selbständig in den Empfangsbetriebsmodus zu schalten und am Telekommunikationsnetz anzumelden. Das mobile Telekommunikationsendgerät muss somit nicht ständig im Empfangsbetriebsmodus betrieben werden, um den Empfang von Nachrichten aus dem Telekommunikationsnetz detektieren zu können. Vielmehr schaltet sich das mobile Telekommunikationsendgerät zur mindestens einen ersten vorgegebenen Zeit automatisch in den Empfangsbetriebsmodus, um zu prüfen, ob zwischenzeitlich eine oder mehrere Nachrichten im Telekommunikationsnetz für das mobile Telekommunikationsendgerät vorliegen. Schaltet der Benutzer des mobilen Telekommunikationsendgerätes den Empfangsbetriebsmodus ab, um beispielsweise nicht durch eingehende Rufe gestört zu werden, oder eine Verlängerung der Stand-By-Zeit zu erreichen, so kann er dennoch über den Eingang von an ihn adressierten Nachrichten informiert werden. Da das mobile Telekommunikationsendgerät zu diesem Zweck gemäß der Erfindung nicht ständig im Empfangsbetriebsmodus betrieben werden muss, kann Energie eingespart und die Betriebsdauer bei Betrieb mit einem Akkumulator verlängert werden, ohne dass auf die Mitteilung über für das mobile Telekommunikationsendgerät im Telekommunikationsnetz vorliegende Nachrichten verzichtet werden muss. Des Weiteren kann beispielsweise bei schlechter Erreichbarkeit oder bei Nichterreichbarkeit des mobilen Telekommunikationsendgerätes im Telekommunikationsnetz eine häufigere Aktivierung des Empfangsbetriebsmodus im Abfragebetriebsmodus eingestellt werden, um eine nicht erfolgreiche Prüfung auf für das Telekommunikationsendgerät im Telekommunikationsnetz vorliegende Nachrichten aufgrund der mangelhaften Erreichbarkeit des mobilen Telekommunikationsendgerätes im Telekommunikationsnetz möglichst frühzeitig nach Wiedererreichbarkeit des mobilen Telekommunikationsendgerätes im Telekommunikationsnetz nachzuholen. Ist die Erreichbarkeit wieder gewährleistet, so können die zeitlichen Abstände zwischen den Aktivierungszeitpunkten für den Empfangsbetriebsmodus im Abfragebetriebsmodus wieder auf den ursprünglich vorgegebenen Wert erhöht werden, falls eine Aktivierung in regelmäßigen Zeitabständen vorgesehen ist. Weiterhin können eine oder mehrere für den Benutzer des mobilen Telekommunikationsendgerätes im Telekommunikationsnetz vorliegende Nachrichten automatisch, d.h. ohne Benutzerinteraktion vom Telekommunikationsnetz an das mobile Telekommunikationsendgerät übertragen und am mobilen Telekommunikationsendgerät wiedergegeben werden, so dass der Benutzer über den Inhalt dieser Nachricht oder dieser Nachrichten komfortabel informiert wird.

Durch die in den Unteransprüchen aufgeführten Maßnahmen sind vorteilhafte Weiterbildungen und Verbesserungen des im Hauptanspruch angegebenen mobilen Telekommunikationsendgerätes möglich.

Besonders vorteilhaft ist es, dass die Steuerung den Empfangsbetriebsmodus frühestens nach einer dritten vorgegebenen Zeit von der Aktivierung des Empfangsbetriebsmodus an wieder abschaltet. Auf diese Weise wird eine Daueraktivierung des Empfangsbetriebsmodus nach dem automatischen Einschalten verhindert und somit Energie eingespart.

Ein weiterer Vorteil besteht darin, daß die Steuerung den Empfangsbetriebsmodus frühestens nach einer Auswertung aller für das mobile Telekommunikationsendgerät im Telekommunikationsnetz vorliegenden Nachrichten wieder abschaltet. Auf diese Weise läßt sich die Betriebsdauer für den Empfangsbetriebsmodus dahingehend optimieren, daß sie nicht länger aber auch nicht kürzer als unbedingt für die Auswertung der Nachrichten erforderlich gewählt wird, so daß einerseits eine einwandfreie Auswertung und andererseits eine maximal mögliche Energieeinsparung durch Abschalten des Empfangsbetriebsmodus nach Auswertung der Nachrichten erreicht wird.

Ein weiterer Vorteil besteht darin, daß die Steuerung für den Fall, in dem sie den Empfang von Informationen für mindestens eine im Telekommunikationsnetz für das mobile Telekommunikationsendgerät vorliegende Nachricht detektiert, eine Auswertung der mindestens einen Nachricht einleitet. Auf diese Weise kann eine für das mobile Telekommunikationsendgerät im Telekommunikationsnetz vorliegende Nachricht automatisch, d.h. ohne Benutzerinteraktion und somit für den Benutzer besonders komfortabel, weiterverarbeitet werden.

Ein weiterer Vorteil besteht darin, daß die Art der Auswertung, insbesondere in Abhängigkeit des Nachrichtentyps, über eine Eingabeeinheit des mobilen Telekommunikationsendgerätes vorgebbar ist. Auf diese Weise kann die automatische Auswertung durch die Steuerung an die Bedürfnisse des Benutzers angepaßt werden.

Ein weiterer Vorteil besteht darin, dass die Auswertung der mindestens einen Nachricht eine akustische und/oder optische Signalisierung an einer Wiedergabevorrichtung des mobilen Telekommunikationsendgerätes umfasst. Auf diese Weise kann der Benutzer des mobilen Telekommunikationsendgerätes über eine oder mehrere für ihn im Telekommunikationsnetz vorliegende Nachrichten informiert werden.

Ein weiterer Vorteil besteht darin, dass die Steuerung die Signalisierung über das Abschalten des Empfangsbetriebsmodus hinaus aufrechterhält. Auf diese Weise kann sichergestellt werden, daß der Benutzer über das Vorliegen der mindestens einen Nachricht informiert wird, insbesondere dann, wenn die Signalisierung nur durch Benutzerinteraktion beendet werden kann.

Ein weiterer Vorteil wird dadurch bewirkt, dass die Steuerung im Abfragebetriebsmodus die mindestens eine erste vorgegebene Zeit zur Aktivierung des Empfangsbetriebsmodus in Abhängigkeit der gerade vorliegenden Kapazität eines Akkumulators des mobilen Telekommunikationsendgerätes vorgibt. Auf diese Weise kann verhindert werden, dass die Kapazität des Akkumulators zu schnell abnimmt, indem der Empfangsbetriebsmodus im Abfragebetriebsmodus seltener, d.h. mit größeren zeitlichen Abständen eingeschaltet wird, um die Betriebsdauer des mobilen Telekommunikationsendgerätes zu erhöhen und Energie einzusparen. Umgekehrt kann bei ausreichender Kapazität des Akkumulators der Empfangsbetriebsmodus im Abfragebetriebsmodus in zeitlich kürzeren Abständen eingeschaltet werden, um für das mobile Telekommunikationsendgerät im Telekommunikationsnetz eingehende Nachrichten möglichst frühzeitig abfragen zu können.

Ein weiterer Vorteil besteht darin, dass die Steuerung im Abfragebetriebsmodus den Empfangsbetriebsmodus in regelmäßigen Zeitabständen aktiviert. Auf diese Weise wird sichergestellt, dass für das mobile Telekommunikationsendgerät im Telekommunikationsnetz eingehende Nachrichten früher oder später detektiert werden, ohne dass dazu der Empfangsbetriebsmodus permanent eingeschaltet sein muss.

### Zeichnung

Ein Ausführungsbeispiel der Erfindung ist in der Zeichnung dargestellt und in der nachfolgenden Beschreibung näher erläutert. Es zeigen

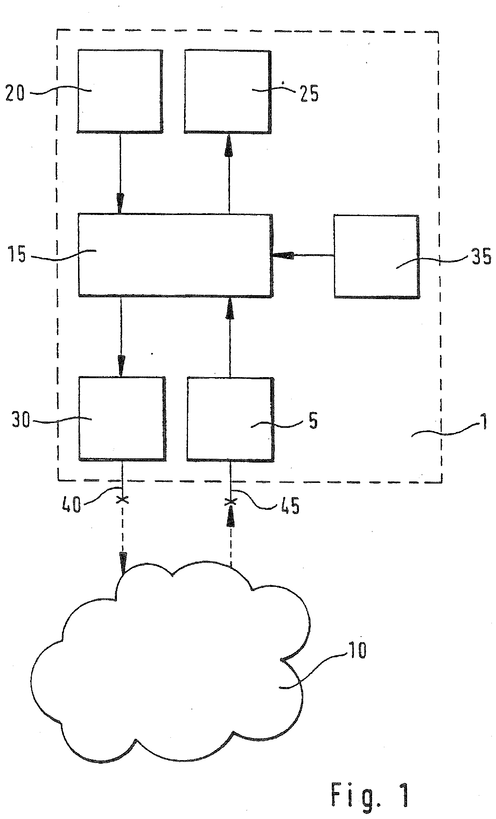

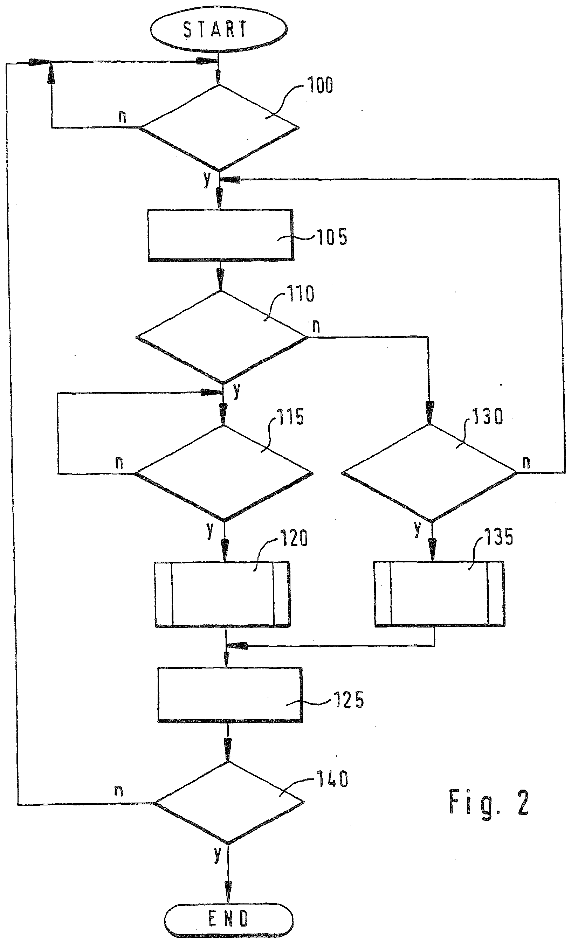

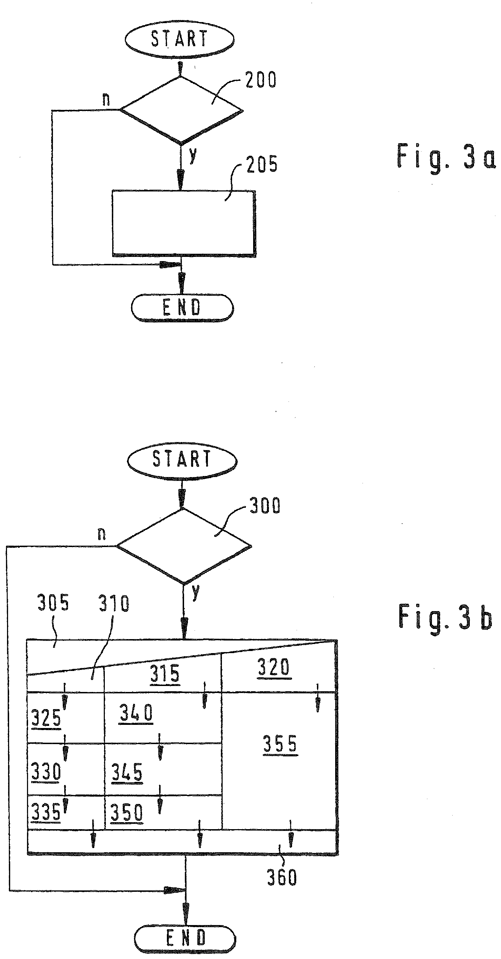

Figur 1 ein Blockschaltbild eines erfindungsgemäßen mobilen Telekommunikationsendgerätes, Figur 2 einen Ablaufplan für die Funktionsweise einer Steuerung des mobilen Telekommunikationsendgerätes, Figur 3a) einen Ablaufplan für eine erste Art der Auswertung von für das mobile Telekommunikationsendgerät im Telekommunikationsnetz vorliegenden Nachrichten und Figur3b) ein Ablaufplan für eine zweite Art der Auswertung von für das mobile Telekommunikationsendgerät im Telekommunikationsnetz vorliegenden Nachrichten.

### Beschreibung des Ausführungsbeispiels

Grundsätzlich ist ein mobiles Telekommunikationsendgerät in einem Mobilfunknetz nur dann erreichbar, wenn es an eben diesem Mobilfunknetz angemeldet ist. Ist es nicht angemeldet, weil es beispielsweise abgeschaltet oder nicht in einem Empfangsbetriebsmodus geschaltet ist oder weil aus empfangstechnischen Gründen keine Verbindung zwischen dem mobilen Telekommunikationsendgerät und einer Basisstation des Mobilfunknetzes herstellbar ist, so besteht die Möglichkeit, für das mobile Telekommunikationsendgerät im Mobilfunknetz eingehende Anrufe umzuleiten, beispielsweise auf eine sogenannte Voice-Mail-Box, wenn es sich um Sprachanrufe bzw. Sprachnachrichten handelt. Die Voice-Mail-Box stellt somit einen Anrufbeantworter im Mobilfunknetz dar. Das mobile Telekommunikationsendgerät bzw. der Benutzer desselben wird dann im weiteren über den eingegangenen Anruf informiert, sobald er für das Mobilfunknetz wieder erreichbar ist, und kann entsprechend die Voice-Mail-Box abfragen. Die Benachrichtigung des mobilen Telekommunikationsendgerätes über einen im Mobilfunknetz für das mobile Telekommunikationsendgerät eingegangenen Anruf oder eine im Mobilfunknetz für das mobile Telekommunikationsendgerät eingegangene Nachricht erfolgt dabei derzeit üblicherweise über einen Kurznachrichtendienst, wie beispielsweise nach dem SMS-Standard (Short Message Service) in einem beispielsweise nach dem GSM-Standard (Global System for Mobile Communications) ausgebildeten Mobilfunknetz.

Ein Kurznachrichtendienst, wie beispielsweise nach dem SMS-Standard, basiert auf den Prinzipien des sog. "Store-and-Forward", d.h., daß Nachrichten grundsätzlich über eine Netzwerkeinheit im Mobilfunknetz versandt werden, die beispielsweise gemäß dem GSM-Standard als Servicecenter ausgebildet sein kann und jede Nachricht speichert, bevor sie an den adressierten Empfänger weitergeleitet wird. Ist der adressierte Empfänger in Form des mobilen Telekommunikationsendgeräts dem Mobilfunknetz nicht verfügbar, weil er im Mobilfunknetz nicht erreichbar bzw. nicht angemeldet ist, so bleibt die an ihn adressierte Nachricht in der Netzwerkeinheit gespeichert. Wird der Empfänger dem Mobilfunknetz wieder verfügbar, so wird dies der Netzwerkeinheit beispielsweise durch ein sogenanntes HLR (Home Location Register) signalisiert und die an den Empfänger adressierte Nachricht bzw. die an den Empfänger adressierten Nachrichten werden automatisch an den Empfänger weitergeleitet. Kurznachrichtendienste dieser Art werden auch zur Benachrichtigung des mobilen Telekommunikationsendgerätes über für das mobile Telekommunikationsendgerät von anderen Diensten, beispielsweise von Internet-E-Mail-Diensten, im Telekommunikationsnetz vorliegende Nachrichten verwendet.

Gemäß der Erfindung wird ein mobiles Telekommunikationsendgerät vorgeschlagen, das sich beispielsweise in vorgegebenen zeitlichen Intervallen selbständig in einen Empfangsbetriebsmodus schaltet und in einem Telekommunikationsnetz anmeldet. Der Empfangsbetriebsmodus bleibt dann solange aktiv, wie es nötig ist, beispielsweise alle im Telekommunikationsnetz für das mobile Telekommunikationsendgerät vorliegenden Nachrichten von einer Netzwerkeinheit des Telekommunikationsnetzes zum mobilen Telekommunikationsendgerät zu übermitteln. Nach Empfang der Nachrichten kann es dann optional vorgesehen sein, daß das mobile Telekommunikationsendgerät den Empfangsbetriebsmodus selbständig wieder abschaltet.

In Figur 1 ist ein solches mobiles Telekommunikationsendgerät mit dem Bezugszeichen 1 gekennzeichnet. Dabei kann es sich beispielsweise um ein Mobiltelefon handeln. Das mobile Telekommunikationsendgerät 1 stellt dabei einen Teilnehmer eines Telekommunikationsnetzes 10 dar, das beispielsweise als Mobilfunknetz ausgebildet sein kann. Im folgenden soll beispielhaft davon ausgegangen werden, daß das mobile Telekommunikationsendgerät 1 als Mobiltelefon und das Telekommunikationsnetz 10 als Mobilfunknetz ausgebildet sind. Das Mobilfunknetz 10 und das Mobiltelefon 1 können dabei beispielsweise nach dem GSM-Standard (Global System for Mobile Communications) oder nach dem UMTS-Standard (Universal Mobile.Telecommunication System) ausgebildet sein. Das Mobiltelefon 1 umfaßt eine Steuerung 15, an die eine Eingabeeinheit 20 und eine Wiedergabevorrichtung 25 angeschlossen sind. Bei der Wiedergabevorrichtung 25 kann es sich um eine akustische und/oder optische Wiedergabevorrichtung handeln. Dazu kann die Wiedergabevorrichtung 25 einen Lautsprecher und/oder eines oder mehrere optische Anzeigeeelemente umfassen. Als optische Anzeigeelemente können dabei Leuchtdioden und/oder ein Display vorgesehen sein. Das Mobiltelefon 1 umfaßt weiterhin eine Sendevorrichtung 30 und eine Empfangsvorrichtung 5, die beide an die Steuerung 15 angeschlossen sind. Das Mobiltelefon 1 umfaßt weiterhin eine beispielsweise als Akkumulator ausgebildete Stromversorgung 35, die die Komponenten des Mobiltelefons 1 in einer in Figur 1 nicht gezeigten Weise mit Strom versorgt. Im folgenden soll die Stromversorgung 35 beispielhaft als Akkumulator ausgebildet sein. Der Akkumulator 35 gibt dabei an die Steuerung 15 ein Signal ab, das Informationen über die aktuelle Kapazität des Akkumulators 35 beinhaltet. An die Sendevorrichtung 30 ist eine Sendeantenne 40 angeschlossen. An die Empfangsvorrichtung 5 ist eine Empfangsantenne 45 angeschlossen. Die Sendeantenne 40 und die Empfangsantenne 45 können auch zu einer gemeinsamen Sende-/Empfangsantenne beispielsweise über eine Antennenweiche kombiniert sein. Über die Sendevorrichtung 30 und die Empfangsvorrichtung 5 kann das Mobiltelefon 1 Signale mit dem Mobilfunknetz 10 austauschen.

Über die Eingabeeinheit 20 kann das Mobiltelefon 1 in einen Empfangsbetriebsmodus geschaltet werden, in dem die Steuerung 15 über die Sendevorrichtung 30 versucht, das Mobiltelefon 1 im Mobilfunknetz 10 anzumelden, um für das Mobiltelefon 1 eingehende Anrufe oder Nachrichten empfangen zu können. Das Mobiltelefon 1 ist im Empfangsbetriebsmodus empfangsbereit für solche eingehenden Anrufe oder Nachrichten aus dem Mobilfunknetz 10.

Das Mobiltelefon 1 kann nun beispielsweise durch Benutzereingabe an der Eingabeeinheit 20 in einen Abfragebetriebsmodus geschaltet werden, in dem die Steuerung 15 für den Fall, daß der Empfangsbetriebsmodus abgeschaltet ist, zu mindestens einer ersten vorgegebenen Zeit den Empfangsbetriebsmodus aktiviert. Dazu meldet die Steuerung 15 das Mobiltelefon 1 im Mobilfunknetz 10 an und prüft, ob innerhalb einer zweiten vorgegebenen Zeit nach der Aktivierung des Empfangsbetriebsmodus Informationen über mindestens eine im Mobilfunknetz 10 für das Mobiltelefon 1 vorliegende Nachricht von einer Netzwerkeinheit des Mobilfunknetzes 10 in der Empfangsvorrichtung 5 über die Empfangsantenne 45 empfangen wurde. Die mindestens eine erste vorgegebene Zeit zur Aktivierung des Empfangsbetriebsmodus kann vom Benutzer des Mobiltelefons 1 an der Eingabeeinheit 20 vorgegeben werden. Dabei kann es vorgesehen sein, daß ein im Abfragebetriebsmodus eingestellter Empfangsbetriebsmodus solange aufrechterhalten wird, bis er vom Benutzer an der Eingabeeinheit 20 wieder abgeschaltet wird. Es kann jedoch auch vorgesehen sein, daß ein im Abfragebetriebsmodus eingeschalteter Empfangsbetriebsmodus automatisch nach einer bestimmten Zeit wieder abgeschaltet wird, um Energie einzusparen. Dazu kann die Steuerung 15 beispielsweise ein Zeitglied umfassen, das den Empfangsbetriebsmodus frühestens nach einer dritten vorgegebenen Zeit von der Aktivierung des Empfangsbetriebsmodus an wieder abschaltet. Die dritte vorgegebene Zeit sollte dabei so bemessen sein, daß bei einer Detektion von für das Mobiltelefon 1 im Mobilfunknetz 10 vorliegenden Nachrichten eine vollständige Auswertung dieser Nachrichten durch die Steuerung 15 ermöglicht wird, sofern diese Auswertung den Empfang von Daten aus dem Mobilfunknetz 10 erfordert. Es sollte also sichergestellt sein, daß die Steuerung 15 den Empfangsbetriebsmodus frühestens nach einer Auswertung aller für das Mobiltelefon 1 im Mobilfunknetz 10 vorliegenden Nachrichten wieder abschaltet, wobei wie beschrieben nur der Teil der Auswertung gemeint ist, der einen aktivierten Empfangsbetriebsmodus, also eine Anmeldung des Mobiltelefons 1 im Mobilfunknetz 10 und die Erreichbarkeit des Mobiltelefons 1 im Mobilfunknetz 10 zum Empfang von Nachrichten erfordert. Weitere Auswertungsschritte können auch bei ausgeschaltetem Empfangsbetriebsmodus erfolgen. Eine längere Aufrechterhaltung des Empfangsbetriebsmodus ist aus Gründen einer gewünschten Energieeinsparung nicht sinnvoll. Die dritte vorgegebene Zeit sollte daher zunächst mindestens derart mittels des Zeitgliedes der Steuerung 15 voreingestellt sein, daß die Steuerung 15 nach Aktivierung des Empfangsbetriebsmodus anhand der vom Mobilfunknetz 10 empfangenen Informationen auswerten kann, wie viele Nachrichten für das Mobiltelefon 1 im Mobilfunknetz 10 vorliegen. Die dritte vorgegebene Zeit sollte dann von der Steuerung 15 in Abhängigkeit der Anzahl der für das Mobiltelefon 1 vorliegenden Nachrichten im Mobilfunknetz 10 derart verlängert werden, daß alle diese Nachrichten bei aktiviertem Empfangsbetriebsmodus vom Mobilfunknetz 10 ins Mobiltelefon 1 geladen werden können, falls dies gewünscht ist. Dazu kann die Steuerung 15 bei Kenntnis der für das Laden einer solchen Nachricht mindestens erforderlichen Zeit und der Kenntnis der Anzahl der für das Mobiltelefon 1 vorliegenden Nachrichten die Zeitkonstante des Zeitgliedes so einstellen, daß sämtliche für das Mobiltelefon 1 vorliegenden Nachrichten auf diese Weise ins Mobiltelefon 1 im Empfangsbetriebsmodus geladen werden können. Die ins Mobiltelefon 1 geladenen Nachrichten werden dann in einem in der Figur 1 nicht dargestellten Speicher für weitere Verarbeitungen zwischengespeichert.

Zur Bestimmung der für das Laden einer Nachricht aus dem Mobilfunknetz 10 in das Mobiltelefon 1 erforderlichen Zeit muß die Steuerung 15 mit den Informationen über das Vorliegen einer oder mehrerer Nachrichten für das Mobiltelefon 1 im Mobilfunknetz 10 mit diesen Informationen auch Daten über den jeweiligen Nachrichtentyp und/oder das jeweilige Nachrichtenformat und die jeweilige Nachrichtengröße der für das Mobiltelefon 1 vorliegenden Nachrichten erhalten. Die für das Laden einer Nachricht aus dem Mobilfunknetz 10 ins Mobiltelefon 1 erforderliche Zeit hängt vom Typ und/oder dem Format und der Größe der zu ladenden Nachricht ab. Es kann daher auch vorgesehen sein, daß der Benutzer des Mobiltelefons 1 mittels der Eingabeeinheit 20 vorgeben kann, bis zu welcher Größe eine für das Mobiltelefon 1 vorliegende Nachricht aus dem Mobilfunknetz 10 ins Mobiltelefon 1 übertragen werden soll, um die Zeit für die Aktivierung des Empfangsbetriebsmodus zu begrenzen und Energie einzusparen. Es kann jedoch zusätzlich oder alternativ auch vorgesehen sein, daß in der Steuerung 15 voreingestellt ist, bis zu welcher Größe eine Nachricht aus dem Mobilfunknetz 10 in das Mobiltelefon 1 geladen werden soll. Die zulässigen Nachrichtengrößen können dabei in Abhängigkeit des Nachrichtentyps und/oder des Nachrichtenformats an der Eingabeeinheit 20 vorgegeben oder in der Steuerung 15 voreingestellt sein.

Wie beschrieben, kann die Steuerung 15 für den Fall, in dem sie im Empfangsbetriebsmodus den Empfang von Informationen durch die Empfangsvorrichtung 5 über mindestens eine im Mobilfunknetz 10 für das Mobiltelefon 1 vorliegende Nachricht detektiert, eine Auswertung der mindestens einen Nachricht einleiten. Dabei kann es vorgesehen sein, daß die Art der einzuleitenden Auswertung vom Benutzer des Mobiltelefons 1 an der Eingabeeinheit 20 vorgegeben werden kann. Zusätzlich oder alternativ kann vorgesehen sein, daß die Art der Auswertung in der Steuerung 15 voreingestellt ist. Die Art der Auswertung kann dabei abhängig vom Nachrichtentyp und/oder Nachrichtenformat vom Benutzer an der Eingabeeinheit 20 vorgebbar oder in der Steuerung 15 voreingestellt sein. Eine mögliche Art der Auswertung mindestens einer für das Mobiltelefon 1 im Mobilfunknetz 10 vorliegende Nachricht kann dabei darin bestehen, daß die Steuerung 15 über die Sendevorrichtung 30 eine Verbindung zum Mobilfunknetz 10 aufbaut, um die mindestens eine Nachricht aus dem Mobilfunknetz 10 in das Mobiltelefon 1 zu laden.

Mit der vom Mobilfunknetz 10 an das Mobiltelefon 1 übermittelten Information über eine im Mobilfunknetz 10 für das Mobiltelefon 1 vorliegende Nachricht kann gleichzeitig eine Information über den Typ und/oder das Format dieser Nachricht übermittelt werden. Dabei kann in der Steuerung 15 in Abhängigkeit der Verarbeitungsmöglichkeiten des Mobiltelefons 1 voreingestellt sein, daß Nachrichten eines oder mehrerer vorgegebener Typen und/oder Formate nicht ins Mobiltelefon 1 geladen werden sollen, weil das Mobiltelefon 1 eine Weiterverarbeitung, insbesondere eine Wiedergabe dieser Nachrichten an der Wiedergabevorrichtung 25 nicht ermöglicht. Zusätzlich kann vom Benutzer vorgegeben werden, daß Nachrichten eines oder mehrerer vorgegebener Typen und/oder Formate nicht zum Mobiltelefon 1 übertragen werden sollen, beispielsweise um Energie einzusparen, wenn die Übertragung einer Nachricht eines bestimmten Typs und/oder Formats vom Mobilfunknetz 10 zum Mobiltelefon 1 besonders zeit- und damit energieintensiv ist.

Als Nachrichtentypen können Textnachrichten, Sprachnachrichten oder Videonachrichten in jeweils verschiedenen Formaten vorgesehen sein, wobei die beschriebene Auswertung wie beschrieben auch in Abhängigkeit des Nachrichtenformats durchgeführt werden könnte, so daß der Benutzer an der Eingabeeinheit 20 die Art der Auswertung auch in Abhängigkeit des Nachrichtenformats vorgeben kann bzw. die Art der Auswertung in der Steuerung 15 in Abhängigkeit des Nachrichtenformats vorgegeben sein kann. Auch unterschiedliche Nachrichtenformate können wie auch unterschiedliche Nachrichtentypen unterschiedliche Ladezeiten für die Nachrichten vom Mobilfunknetz 10 in das Mobiltelefon 1 zur Folge haben, da sie unter anderem die Organisation der Übertragung der entsprechenden Nachrichten und damit die pro Zeiteinheit übertragbaren Nutzdaten der Nachricht festlegen.

Sprachnachrichten können beispielsweise in Form von Voice-Mails in einer Voice-Mail-Box im Mobilfunknetz 10 vorliegen und von der Voice-Mail-Box ins Mobiltelefon 1 geladen werden. Der beschriebene Ladevorgang kann auch zeitversetzt zum aktivierten Empfangsbetriebsmodus zu einer vierten vorgegebenen Zeit erfolgen, um beispielsweise günstigere Übertragungstarife oder Feldstärkebedingungen für die Übertragung der Nachrichten auszunutzen.

Eine weitere und einfachere Art der Auswertung kann darin bestehen, eine im Mobilfunknetz 10 für das Mobiltelefon 1 vorliegende Nachricht akustisch und/oder optisch an der Wiedergabevorrichtung 25 zu signalisieren. Dabei kann es auch vorgesehen sein, daß die Steuerung 15 die Signalisierung über das Abschalten des Empfangsbetriebsmodus hinaus aufrechterhält, entweder für eine vorgegebene Zeit oder bis zu einer Benutzerinteraktion an der Eingabeeinheit 20. Das Laden einer solchermaßen signalisierten Nachricht aus dem Mobilfunknetz 10 ins Mobiltelefon 1 kann dann benutzerinitiiert erfolgen. Eine optische Signalisierung kann beispielsweise durch Blinken einer Leuchtdiode oder durch Darstellung eines oder mehrerer alphanumerischer Zeichen an einem Display erfolgen. Eine akustische Wiedergabe kann durch ein akustisches Signal, beispielsweise einen Tonruf erfolgen.

Im folgenden wird nun beschrieben, wie die mindestens eine erste vorgegebene.Zeit für die Aktivierung des Empfangsbetriebsmodus im Abfragebetriebsmodus vorgegeben werden kann. Dabei kann es vorgesehen sein, daß die Steuerung 15 im Abfragebetriebsmodus den Empfangsbetriebsmodus in regelmäßigen Zeitabständen aktiviert. Diese Zeitabstände können vom Benutzer an der Eingabeeinheit 20 vorgegeben oder in der Steuerung 15 voreingestellt sein. So kann es beispielsweise vorgesehen sein, im Abfragebetriebsmodus den Empfangsbetriebsmodus alle fünf Minuten zu aktivieren. Im Vergleich zu einer ständigen Aktivierung des Empfangsbetriebsmodus kann somit Energie eingespart werden, wenn auch die Detektion von für das Mobiltelefon 1 eingehende Nachrichten mit einer Verzögerung von in diesem Beispiel maximal fünf Minuten in Kauf genommen werden muß. Diese Energieeinsparung macht besonders dann Sinn, wenn regelmäßige Auflademöglichkeiten für den Akkumulator 35 nicht gegeben sind, beispielsweise beim Camping oder wenn das Ladegerät nicht verfügbar ist.

Zusätzlich oder alternativ kann es auch vorgesehen sein, daß die Steuerung 15 im Abfragebetriebsmodus die mindestens eine erste vorgegebene Zeit zur Aktivierung des Empfangsbetriebsmodus in Abhängigkeit der gerade vorliegenden Kapazität des Akkumulators 35 vorgibt. So kann es insbesondere in einem Abfragebetriebsmodus, bei dem der Empfangsbetriebsmodus in regelmäßigen Zeitabständen aktiviert wird, vorgesehen sein, diese Zeitabstände mit abnehmender Kapazität des Akkumulators 35 zu vergrößern, um Energie einzusparen und die Betriebsbereitschaft des Mobiltelefons 1 möglichst lange aufrechtzuerhalten.

Weiterhin kann es vorgesehen sein, daß die Steuerung 15 im Abfragebetriebsmodus die mindestens eine erste vorgegebene Zeit zur Aktivierung des Empfangsbetriebsmodus in Abhängigkeit der im zuletzt eingestellten Empfangsbetriebsmodus erzielten Erreichbarkeit des Mobiltelefons 1 im Mobilfunknetz 10 vorgibt. Nichterreichbarkeit liegt beispielsweise dann vor, wenn das Mobilftelefon 1 trotz Einschalten des Empfangsbetriebsmodus nicht vom Mobilfunknetz 10 erreichbar ist, beispielsweise aufgrund ungünstiger Feldstärkebedingungen, die einen Empfang von Signalen aus dem Mobilfunknetz 10 im Mobiltelefon 1 erschweren oder nicht mehr vom Rauschen unterscheidbar machen. Eine Nichterreichbarkeit des Mobiltelefons 1 durch das Mobilfunknetz 10 bei eingeschaltetem Empfangsbetriebsmodus kann jedoch auch dann vorliegen, wenn das Mobiltelefon 1 für das Mobilfunknetz 10 keine Betriebserlaubnis hat. Wurde also im zuletzt eingestellten Empfangsbetriebsmodus keine Erreichbarkeit des Mobiltelefons 1 im Mobilfunknetz 10 erzielt, so kann es vorgesehen sein, innerhalb möglichst kurzer Zeit einen neuen Versuch zu starten und den Empfangsbetriebsmodus wieder einzuschalten. Dies ist insbesondere dann sinnvoll, wenn die Nichterreichbarkeit des Mobiltelefons 1 auf Feldstärkeschwankungen der im Mobiltelefon 1 vom Mobilfunknetz 10 empfangenen Signale beruht. Beruht die Nichterreichbarkeit auf einer Nichtberechtigung des Mobiltelefons 1 im Mobilfunknetz 10, so kann auch ein längerer zeitlicher Abstand bis zum nächsten Einschalten des Empfangsbetriebsmodus sinnvoll sein, um dem Benutzer des Mobiltelefons 1 die Gelegenheit zu geben, das Mobilfunknetz zu wechseln oder eine Betriebserlaubnis im Mobilfunknetz zu erhalten. Dabei kann die Steuerung 15 aus den in der Empfangsvorrichtung 5 empfangenen Signalen detektieren, aus welchem Grund das Mobiltelefon 1 im Mobilfunknetz 10 nicht erreichbar ist. Bei Feldstärkeschwankungen würde die Steuerung 15 innerhalb einer vorgegebenen Zeit kein gültiges Empfangssignal detektieren, wohingegen bei Nichtberechtigung eine entsprechende Nachricht vom Mobilfunknetz 10 von der Steuerung 15 detektiert werden könnte. Die Steuerung 15 kann dann in Abhängigkeit der detektierten Nichterreichbarkeit den Zeitpunkt für die nächste Aktivierung des Empfangsbetriebsmodus im Abfragebetriebsmodus vorgeben.

Da insbesondere bei der regelmäßigen Aktivierung des Empfangsbetriebsmodus die Zugangsidentifikation des Mobiltelefons 1 zum Mobilfunknetz 10 im Mobiltelefon 1 gespeichert sein muß, ist es sinnvoll, das Mobiltelefon 1 in dem beschriebenen Abfragebetriebsmodus durch eine zusätzliche Identifikationsnummer vor unbefugtem Zugriff zu sichern. Es wird somit zwischen der Zugangsidentifikation zum Mobilfunknetz 10 und einer Zugangsidentifikation zum Mobiltelefon 1 unterschieden.

Figur 2 zeigt einen möglichen Funktionsablauf im Abfragebetriebsmodus, der auch als Poll-Modus bezeichnet wird. Dabei wird zwischen einem Abfrageintervall oder Poll-Intervall, einem ON-Intervall und einem OFF-Intervall unterschieden. Das ON-Intervall bezeichnet die Zeit, in der der Empfangsbetriebsmodus eingeschaltet ist, d.h. in der das Mobiltelefon 1 am Mobilfunknetz 10 angemeldet ist. Das OFF-Intervall bezeichnet die Zeit, in der der Empfangsbetriebsmodus ausgeschaltet ist. Das Abfrageintervall ist dann die Summe aus dem ON-Intervall und dem OFF-Intervall und beschreibt die Zeit des auf diese Weise gebildeten Gesamtabfragezyklus.

Solange das OFF-Intervall nicht abgelaufen ist und der Empfangsbetriebsmodus nicht eingeschaltet ist, so daß sich das Mobiltelefon 1 beispielsweise in einem sogenannten Sleep-Modus befindet, passiert nichts, so daß kaum Kapazität des Akkumulators 35 verbraucht wird. Bei Programmpunkt 100 prüft die Steuerung 15, ob das OFF-Intervall abgelaufen ist. Ist dies der Fall, so wird zu einem Programmpunkt 105 verzweigt, andernfalls wird zum Programmpunkt 100 zurückverzweigt. Nach Ablauf des OFF-Intervalls schaltet die Steuerung 15 bei Programmpunkt 105 den Empfangsbetriebsmodus zu einem Zeitpunkt ein, der dem mindestens einen ersten vorgegebenen Zeitpunkt entspricht, und versucht, sich über die Sendevorrichtung 30 am Mobilfunknetz 10 anzumelden. Diese Anmeldeprozedur sollte nach einer vorgegebenen Zeit abgebrochen werden, wenn die Anmeldung nicht gelingt, beispielsweise weil aufgrund der Feldstärkebedingungen kein Signal vom Mobilfunknetz 10 im Mobiltelefon 1 empfangen wird oder das Mobiltelefon 1 für das Mobilfunknetz 10 nicht berechtigt ist oder dergleichen. Bei einem Programmpunkt 110 prüft die Steuerung 15, ob die Anmeldung im Mobilfunknetz 10 erfolgreich war. Ist dies der Fall, so wird zu einem Programmpunkt 115 verzweigt, andernfalls wird zu einem Programmpunkt 130 verzweigt. Bei Programmpunkt 130 prüft die Steuerung 15, ob die für die Anmeldung vorgegebene Zeit abgelaufen ist. Ist dies der Fall, so wird zu einem Programmpunkt 135 verzweigt, andernfalls wird zu Programmpunkt 105 zurückverzweigt. Bei Programmpunkt 135 leitet die Steuerung 15 eine Fehlerbehandlungsprozedur ein, die die mißglückte Anmeldung im Mobilfunknetz 10 bearbeitet, indem sie beispielsweise eine Fehleranzeige an der Wiedergabevorrichtung 25 bewirkt, den Zeitabstand zum nächsten Einschalten des Empfangsbetriebsmodus verkürzt oder dergleichen. Anschließend wird zu einem Programmpunkt 125 verzweigt. Gelingt die Anmeldung im Mobilfunknetz 10, so prüft die Steuerung 15 bei Programmpunkt 115, ob ein vorgegebenes Benachrichtigungszeitintervall bzw. die zweite vorgegebene Zeit vom Aktivieren des Empfangsbetriebsmodus an abgelaufen ist. Dieses ist so bemessen, daß mit Sicherheit alle Benachrichtigungen vom Mobilfunknetz zum Mobiltelefon 1 übertragen werden können, die Informationen über das Vorliegen von Nachrichten für das Mobiltelefon 1 im Mobilfunknetz 10 beinhalten. Ist das Benachrichtigungszeitintervall abgelaufen, so wird zu einem Programmpunkt 120 verzweigt, andernfalls wird zu Programmpunkt 115 zurückverzweigt. Bei Programmpunkt 120 startet die Steuerung 15 eine Auswertungsprozedur, die weitere Aktivitäten des Mobiltelefons 1 einleitet. Nach Abschluß dieser Auswertungsprozedur wird dann zu Programmpunkt 125 verzweigt, bei dem die Steuerung 15 den Empfangsbetriebsmodus zum dritten vorgegebenen Zeitpunkt nach Aktivierung des Empfangsbetriebsmodus wieder abschaltet, womit der Ausgangszustand wieder erreicht ist. Dabei können bei Programmpunkt 120 eingeleitete Aktivitäten, wie z.B. das Signalisieren von für das Mobiltelefon 1 im Mobilfunknetz 10 eingegangenen Nachrichten weiter aufrechterhalten werden. Bei Programmpunkt 105 wird also das ON-Intervall eingeschaltet, das bei Programmpunkt 125 wieder ausgeschaltet wird und vom OFF-Intervall abgelöst wird. Nach Programmpunkt 125 wird zu einem Programmpunkt 140 verzweigt, bei dem die Steuerung 15 prüft, ob der Abfragebetriebsmodus vom Benutzer an der Eingabeeinheit 20 abgeschaltet wurde. Ist dies der Fall, so wird das Programm verlassen, anderenfalls wird zu Programmpunkt 100 zurückverzweigt.

Die Figuren 3a) und 3b) zeigen jeweils eine mögliche Struktur einer Auswertungsprozedur. Ein erstes Beispiel für eine solche Auswertungsprozedur stellt dabei Figur 3a) dar. Dabei prüft die Steuerung 15 bei einem Programmpunkt 200 anhand der vom Mobilfunknetz 10 an das Mobiltelefon 1 im Benachrichtigungs-Zeitintervall übertragenen Informationen, ob für das Mobiltelefon 1 mindestens eine Nachricht im Mobilfunknetz 10 vorliegt. Ist dies der Fall, so wird zu einem Programmpunkt 205 verzweigt, anderenfalls wird die Auswertungsprozedur verlassen. Bei Programmpunkt 205 veranlaßt die Steuerung 15 eine Signalisierung der mindestens einen für das Mobiltelefon 1 im Mobilfunknetz 10 vorliegenden Nachricht in akustischer und/oder optischer Form an der Wiedergabevorrichtung 25, beispielsweise durch Blinken einer Leuchtdiode, durch Anzeige im Display und/oder durch ein akustisches Signal, wie beispielsweise einen Tonruf an einem Lautsprecher.

In Figur 3b) ist ein zweites Beispiel für eine Auswertungsprozedur dargestellt. Dabei prüft die Steuerung bei einem Programmpunkt 300 wiederum, ob vom Mobilfunknetz 10 während dem Benachrichtigungszeitintervall Informationen zum Mobiltelefon 1 übertragen wurden, nach denen im Mobilfunknetz 10 mindestens eine Nachricht für das Mobiltelefon 1 vorliegt. Ist dies der Fall, so wird zu einem Programmpunkt 305 verzweigt, andernfalls wird die Auswertungsprozedur verlassen. Bei Programmpunkt 305 prüft die Steuerung 15, welchen Typs die mindestens eine für das Mobiltelefon 1 im Mobilfunknetz 10 vorliegende Nachricht ist. Stellt die Steuerung 15 bei Programmpunkt 305 fest, daß die mindestens eine Nachricht eine Internet-E-Mail-Nachricht ist, so verzweigt sie zu einem Programmpunkt 310 und veranlaßt anschließend bei einem Programmpunkt 325 über die Sendevorrichtung 30 einen Verbindungsaufbau über das Mobilfunknetz 10 zu einem Internet-Server, in dem die Internet-E-Mail-Nachricht gespeichert ist. Anschließend wird zu einem Programmpunkt 330 verzweigt, bei dem das mindestens eine für das Mobiltelefon 1 vorliegende Internet-E-Mail vom Internet-Server über das Mobilfunknetz 10 und die Empfangsvorrichtung 5 ins Mobiltelefon 1 geladen wird. Anschließend wird zu einem Programmpunkt 335 verzweigt, bei dem die Steuerung 15 den Abbruch der Verbindung veranlaßt. Anschließend wird zu einem Programmpunkt 360 verzweigt, bei dem die Steuerung 15 den Eingang des mindestens einen Internet-E-Mails im Mobiltelefon 1 akustisch und/oder optisch an der Wiedergabevorrichtung 25 signalisiert. Anschließend wird die Auswertungsprozedur verlassen. Stellt die Steuerung 15 bei Programmpunkt 305 fest, daß mindestens eine Sprachnachricht, beispielsweise in Form einer Voice-Mail, im Mobilfunknetz 10 für das Mobiltelefon 1 vorliegt, so wird zu einem Programmpunkt 315 verzweigt. Anschließend wird bei einem Programmpunkt 340 von der Steuerung 15 über die Sendevorrichtung 30 und das Mobilfunknetz 10 eine Verbindung zu einer Voice-Mail-Box aufgebaut, in der die mindestens eine Voice-Mail für das Mobiltelefon 1 gespeichert ist. Anschließend wird bei einem Programmpunkt 345 die mindestens eine Voice-Mail aus der Voice-Mail-Box über das Mobilfunknetz 10 und die Empfangsvorrichtung 5 in das Mobiltelefon 1 geladen. Anschließend veranlaßt die Steuerung 15 bei einem Programmpunkt 350 einen Abbruch der aufgebauten Verbindung. Anschließend wird dann zu Programmpunkt 360 verzweigt und der Eingang der mindestens einen Voice-Mail, veranlaßt durch die Steuerung 15, an der Wiedergabevorrichtung 25 akustisch und/oder optisch signalisiert. Erkennt die Steuerung 15 bei Programmpunkt 305, daß mindestens eine Nachricht für das Mobiltelefon 1 im Mobilfunknetz 10 vorliegt, die keine Internet-E-Mail und keine Voice-Mail ist, so wird zu einem Programmpunkt 320 verzweigt. Anschließend veranlaßt die Steuerung 15 bei einem Programmpunkt 355 den Verbindungsaufbau über die Sendevorrichtung 30 und das Mobilfunknetz 10 zu einem Service-Center, in dem diese mindestens eine weitere Nachricht gespeichert ist. Über diese Verbindung wird diese mindestens eine weitere Nachricht dann über das Mobilfunknetz 10 und die Empfangsvorrichtung 5 an das Mobiltelefon 1 übertragen. Anschließend veranlaßt die Steuerung 15 den Abbruch der aufgebauten Verbindung. Anschließend wird zu Programmpunkt 360 verzweigt, bei dem die Steuerung 15 eine akustische und/oder optische Signalisierung des Eingangs der mindestens einen weiteren Nachricht am Mobiltelefon 1 an der Wiedergabevorrichtung 25 signalisiert. Nach Programmpunkt 360 wird die Auswertungsprozedur verlassen.

Eine weitere Verarbeitung von in das Mobiltelefon 1 aus dem Mobilfunknetz 10 geladenen Nachrichten kann dann bei ausgeschaltetem Empfangsbetriebsmodus erfolgen und in einer Fortdauer der akustischen und/oder optischen Signalisierung der geladenen Nachrichten oder einer akustischen und/oder optischen Wiedergabe des Inhalts der geladenen Nachrichten an der Wiedergabevorrichtung 25 bestehen, wobei eine Fortdauer der Signalisierung nach einer vorgegebenen Zeit automatisch oder durch Benutzerinteraktion an der Eingabeeinheit 20 beendet werden kann. Die Wiedergabe des Inhalts der geladenen Nachrichten kann ebenfalls über die Eingabeeinheit 20 benutzerinitiiert und beispielsweise zusätzlich über die Wiedergabevorrichtung 25 menügesteuert erfolgen. Auch eine automatische sequentielle Wiedergabe des Inhalts der geladenen Nachrichten veranlaßt durch die Steuerung 15 wäre denkbar, wobei beispielsweise der Inhalt jeder geladenen Nachricht für eine vorgegebene Zeit an der wiedergabevorrichtung 25 vollständig oder teilweise wiedergegeben werden könnte, die bei Bedarf vom Benutzer über die Eingabeeinheit 20 auch verlängert werden könnte.

Die mindestens eine erste vorgegebene Zeit, die zweite vorgegebene Zeit, die dritte vorgegebene Zeit und die vierte vorgegebene Zeit können vom Benutzer an der Eingabeeinheit 20 vorgegeben oder in der Steuerung 15 voreingestellt sein.

## Patentansprüche

1. Mobiles Telekommunikationsendgerät (1) mit einer Empfangsvorrichtung (5) zum Empfang von Nachrichten aus einem Telekommunikationsnetz (10) in einem Empfangsbetriebsmodus, wobei ein Abfragebetriebsmodus am mobilen Telekommunikationsendgerät (1) einstellbar ist, in dem eine Steuerung (15) derart eingerichtet ist, dass sie, für den Fall, dass der Empfangsbetriebsmodus abgeschaltet ist, zu mindestens einer ersten vorgegebenen Zeit den Empfangsbetriebsmodus aktiviert, und wobei die Steuerung (15) derart eingerichtet ist, dass sie prüft, ob innerhalb einer zweiten vorgegebenen Zeit nach der Aktivierung des Empfangsbetriebsmodus Informationen über mindestens eine im Telekommunikationsnetz (10) für das mobile Telekommunikationsendgerät (1) vorliegende Nachricht in der Empfangsvorrichtung (5) empfangen wurden und die Steuerung (15) derart eingerichtet ist, dass sie im Abfragebetriebsmodus die mindestens eine erste vorgegebene Zeit zur Aktivierung des Empfangsbetriebsmodus in Abhängigkeit der im zuletzt eingestellten Empfangsbetriebsmodus erzielten Erreichbarkeit des mobilen Telekommunikationsendgerätes (1) im Telekommunikationsnetz (10) vorgibt, wobei die Steuerung (15) derart eingerichtet ist, dass sie für den Fall, in dem sie den Empfang von Informationen über mindestens eine im Telekommunikationsnetz (10) für das mobile Telekommunikationsendgerät (1) vorliegende Nachricht detektiert, eine Auswertung der mindestens einen Nachricht einleitet, und wobei die Steuerung (15) bei der Auswertung der mindestens einen Nachricht über eine Sendevorrichtung (30) des mobilen Telekommunikationsendgerätes (1) eine Verbindung zum Telekommunikationsnetz (10), insbesondere zu einer vierten vorgegebenen Zeit, aufbaut, um die mindestens eine Nachricht aus dem Telekommunikationsnetz (10) in das mobile Telekommunikationsendgerät (1) zu laden.

2. Mobiles Telekommunikationsendgerät (1) nach Anspruch 1, **dadurch gekennzeichnet, dass** die Steuerung (15) derart eingerichtet ist, dass sie den Empfangsbetriebsmodus frühestens nach einer dritten vorgegebenen Zeit von der Aktivierung des Empfangsbetriebsmodus an wieder abschaltet.

3. Mobiles Telekommunikationsendgerät (1) nach Anspruch 1 oder 2, **dadurch gekennzeichnet, dass** die Steuerung (15) derart eingerichtet ist, dass sie den Empfangsbetriebsmodus frühestens nach einer Auswertung aller für das mobile Telekommunikationsendgerät (1) im Telekommunikationsnetz (10) vorliegenden Nachrichten wieder abschaltet.

4. Mobiles Telekommunikationsendgerät (1) nach Anspruch 1, **dadurch gekennzeichnet, dass** die Art der Auswertung, insbesondere in Abhängigkeit des Nachrichtentyps, über eine Eingabeeinheit (20) des mobilen Telekommunikationsendgerätes (1) vorgebbar ist.

5. Mobiles Telekommunikationsendgerät (1) nach Anspruch 1 oder 4, **dadurch gekennzeichnet, dass** die Auswertung der mindestens einen Nachricht eine akustische und/oder optische Signalisierung an einer Wiedergabevorrichtung (25) des mobilen Telekommunikationsendgerätes (1) umfasst.

6. Mobiles Telekommunikationsendgerät (1) nach Anspruch 5, soweit dieser auf einen der Ansprüche 2 oder 3 rückbezogen ist, **dadurch gekennzeichnet, dass** die Steuerung (15) derart eingerichtet ist, dass sie die Signalisierung über das Abschalten des Empfangsbetriebsmodus hinaus aufrechterhält.

7. Mobiles Telekommunikationsendgerät (1) nach einem der vorherigen Ansprüche, **dadurch gekennzeichnet, dass** die Steuerung (15) derart eingerichtet ist, dass sie im Abfragebetriebsmodus die mindestens eine erste vorgegebene Zeit zur Aktivierung des Empfangsbetriebsmodus in Abhängigkeit der gerade vorliegenden Kapazität eines Akkumulators (35) des mobilen Telekommunikationsendgerätes (1) vorgibt.

8. Mobiles Telekommunikationsendgerät (1) nach einem der vorherigen Ansprüche, **dadurch gekennzeichnet, dass** die Steuerung (15) derart eingerichtet ist, dass sie im Abfragebetriebsmodus den Empfangsbetriebsmodus in regelmäßigen Zeitabständen aktiviert.

## Claims

1. Mobile telecommunication terminal (1) comprising a receiving device (5) for receiving messages from a telecommunication network (10) in a receiving operating mode, wherein an enquiry operating mode can be set at the mobile telecommunication terminal (1), in which a controller (15) is configured in such a way that, in the case where the receiving operating mode is switched off, it activates the receiving operating mode at at least one first predetermined time, and wherein the controller (15) is configured in such a way that it checks whether information about at least one message present for the mobile telecommunication terminal (1) in the telecommunication network (10) has been received in the receiving device (5) within a second predetermined time after the activation of the receiving operating mode and the controller (15) is configured in such a way that, in the enquiry operating mode, it predetermines the at least one first predetermined time for activating the receiving operating mode in dependence on the availability of the mobile telecommunication terminal (1) in the telecommunication network (10) achieved in the last receiving operating mode set, wherein the controller (15) is configured in such a way that, in the case where it detects the reception of information about at least one message present for the mobile telecommunication terminal (1) in the telecommunication network (10), it initiates an evaluation of the at least one message, and wherein the controller (15), in the evaluation of the at least one message sets up a connection via a transmitting device (30) of the mobile telecommunication terminal (1) to the telecommunication network (10), particularly at a fourth predetermined time in order to load the at least one message from the telecommunication network (10) into the mobile telecommunication terminal (1).

2. Mobile telecommunication terminal (1) according to Claim 1, **characterized in that** the controller (15) is configured in such a way that it switches the receiving operating mode off again at the earliest after a third predetermined time from the activation of the receiving operating mode.

3. Mobile telecommunication terminal (1) according to Claim 1 or 2, **characterized in that** the controller (15) is configured in such a way that it switches the receiving operating mode off again at the earliest after an evaluation of all messages present for the mobile telecommunication terminal (1) in the telecommunication network (10).

4. Mobile telecommunication terminal (1) according to Claim 1, **characterized in that** the type of evaluation can be predetermined, particularly in dependence on the type of message, via an input unit (20) of the mobile telecommunication terminal (1).

5. Mobile telecommunication terminal (1) according to Claim 1 or 4, **characterized in that** the evaluation of the at least one message comprises an audible and/or visual signalling at a reproduction device (25) of the mobile telecommunication terminal (1).

6. Mobile telecommunication terminal (1) according to Claim 5, as far as the latter is referred back to one of Claims 2 or 3, **characterized in that** the controller (15) is configured in such a way that it maintains the signalling past the switching-off of the receiving operating mode.

7. Mobile telecommunication terminal (1) according to one of the preceding claims, **characterized in that** the controller (15) is configured in such a way that, in the enquiry operating mode, it predetermines the at least one first predetermined time for activating the receiving operating mode in dependence of the currently available capacity of an accumulator (35) of the mobile telecommunication terminal (1).

8. Mobile telecommunication terminal (1) according to one of the preceding claims, **characterized in that** the controller (15) is configured in such a way that, in the enquiry operating mode, it activates the receiving operating mode at regular time intervals.

## Revendications

1. Terminal de télécommunication mobile (1) comprenant un dispositif de réception (5) pour recevoir des messages d'un réseau de télécommunication (10) dans un mode de fonctionnement en réception, dans lequel il est possible de régler sur le terminal de télécommunication mobile (1) un mode de fonctionnement en interrogation dans lequel une commande (15) est configurée de telle manière que, dans le cas où le mode de fonctionnement en réception est désactivé, elle active le mode de fonctionnement en réception à au moins un premier instant prédéfini, et la commande (15) est configurée de telle manière qu'elle vérifie si, à un deuxième instant prédéfini après l'activation du mode de fonctionnement en réception, des informations relatives à au moins un message présent dans le réseau de télécommunication (10) pour le terminal de télécommunication mobile (1) ont été reçues dans le dispositif de réception (5) et la commande (15) est configurée de telle manière que en mode de fonctionnement en interrogation, elle prédéfinit l'au moins un premier instant prédéfini pour l'activation du mode de fonctionnement en réception en fonction de l'accessibilité obtenue du terminal de télécommunication mobile (1) dans le réseau de télécommunication (10) lors du dernier mode de fonctionnement en réception établi, dans lequel la commande (15) est configurée de telle manière que, dans le cas où elle détecte la réception d'informations relatives à au moins un message présent dans le réseau de télécommunication (10) pour le terminal de télécommunication mobile (1), elle initie une analyse de l'au moins un message, et dans lequel la commande (15), lors de l'analyse de l'au moins un message établit une liaison avec le réseau de télécommunication (10) par le biais d'un dispositif d'émission (30) du terminal de télécommunication mobile (1), notamment à un quatrième instant prédéfini, afin de charger l'au moins un message du réseau de télécommunication (10) dans le terminal de télécommunication mobile (1).

2. Terminal de télécommunication mobile (1) selon la revendication 1, **caractérisé en ce que** la commande (15) est configurée de telle manière qu'elle désactive de nouveau le mode de fonctionnement en réception au plus tôt après un troisième instant prédéfini à partir de l'activation du mode de fonctionnement en réception.

3. Terminal de télécommunication mobile (1) selon la revendication 1 ou 2, **caractérisé en ce que** la commande (15) est configurée de telle manière qu'elle désactive de nouveau le mode de fonctionnement en réception au plus tôt après une analyse de tous les messages présents dans le réseau de télécommunication (10) pour le terminal de télécommunication mobile (1).

4. Terminal de télécommunication mobile (1) selon la revendication 1, **caractérisé en ce que** le type d'analyse peut être prédéfini, notamment en fonction du type de message, par le biais d'une unité de saisie (20) du terminal de télécommunication mobile (1).

5. Terminal de télécommunication mobile (1) selon la revendication 1 ou 4, **caractérisé en ce que** l'analyse de l'au moins un message comprend une signalisation sonore et/ou visuelle sur le dispositif de reproduction (25) du terminal de télécommunication mobile (1).

6. Terminal de télécommunication mobile (1) selon la revendication 5, sous réserve que celle-ci se rapporte à l'une des revendications 2 ou 3, **caractérisé en ce que** la commande (15), est configurée de telle manière qu'elle maintient la signalisation au-delà de la désactivation du mode de fonctionnement en réception.

7. Terminal de télécommunication mobile (1) selon l'une des revendications précédentes, **caractérisé en ce que** la commande (15) est configurée de telle manière qu'elle en mode de fonctionnement en interrogation, elle prédéfinit l'au moins un premier instant prédéfini pour l'activation du mode de fonctionnement en réception en fonction de la capacité momentanément disponible d'un accumulateur (35) du terminal de télécommunication mobile (1).

8. Terminal de télécommunication mobile (1) selon l'une des revendications précédentes, **caractérisé en ce que** la commande (15) est configurée de telle manière que en mode de fonctionnement en interrogation, elle active le mode de fonctionnement en réception à intervalles réguliers.
